Europäisches Patentamt

European Patent Office

Office européen des brevets

(19)

(11) Publication number: **0 369 960**
**A1**

## (12) EUROPEAN PATENT APPLICATION

(21) Application number: **89850371.9**

(51) Int. Cl.⁵: **H04J 3/02, H04Q 11/04**

(22) Date of filing: **30.10.89**

(30) Priority: **18.11.88 SE 8804195**

(43) Date of publication of application:
**23.05.90 Bulletin 90/21**

(84) Designated Contracting States:
**BE CH DE ES FR GB GR IT LI NL**

(71) Applicant: **TELEFONAKTIEBOLAGET L M ERICSSON**

**S-126 25 Stockholm(SE)**

(72) Inventor: **Lynn, Michael Lars Magnus**
**Lievägen 12**
**S-191 62 Sollentuna(SE)**

(74) Representative: **Lövgren, Tage et al**
**Telefonaktiebolaget L M Ericsson Patent Department**
**S-126 25 Stockholm(SE)**

(54) **Universal micro circuit for telecommunication applications.**

(57) The arrangement according to this invention comprises a universal micro circuit (IC) in digital signal processing for example for storing and transmitting information in a telecommunication system. The circuit has many applications, although the field of application according to the exemplifying embodiment included concerns the storage and transmission of information between switch modules in a telephone exchange. A mircro-circuit (IC) of the given kind includes on one single silicon plate input/output units (IO) for adaption to different types of external units, memory modules (MM) which can be combined for varying memory-capacity requirements and applications, and gate-matrix part (GA) with the aid of which a large number of logic functions can be implemented. The proportion of the silicon plate area used for the memory part is considerably greater than the proportion of the area used for the gate-matrix part. The circuit enables very large scale integration to be achieved and affords in a small physical space, one single silicon plate, a high packing density, few external connections between silicon plates, which results in few internal connections on superior system levels, short propagation times and low power consumption.

Fig.3

## UNIVERSAL MICRO CIRCUIT FOR TELECOMMUNICATION APPLICATIONS

TECHNICAL FIELD

The arrangement according to this invention comprises a universal micro circuit in digital signal processing for example for storing and transmitting information in a telecommunication system.

BACKGROUND ART

In present day known technology, a number of circuits intended for relatively slow data speeds are used to solve certain application problems. Normally, a large number of circuits are needed for one single application.

DISCLOSURE OF INVENTION

Problems which arise in known techniques are, for instance, the large number of internal connections resulting from a large number of circuits, the difficulties in achieving short cycle times when the circuits are spaced far apart, the high power consumption, and also the large number of connecting pins that are involved. When taken together, these problems create high demands on space.

The arrangement according to the present invention is characterized by the features set forth in the following claims and solves the aforesaid problems by large scale integration of different functions on a single chip (silicon plate). There are few connections between silicon chips on a printed circuit board, but many internal connections on a silicon chip, since it is about 100 times cheaper to make the connections on the chip than on the printed circuit board. This chip is a VLSI circuit (Very Large Scale Integration) intended for a number of mutually different telecommunication applications. The circuit consists of a number of read/write memory units and a gate-matrix area for forming standard random logic. The circuit also includes input/output buffers (I/O) which enable communication to take place over a modified CCITT standard interface, called IVC4 (Internal Virtual Container, Level 4). In the case of this internal interface, information is transmitted between switching modules in a larger switch in a telecommunications system having a speed of 163.84 Mbit/s, hereinafter referred to as the 164 Mbit/s. Also included in the 164 Mbit/s-frame is an internal-switch overhead of 130 bytes, which is included in order to make control signalling and switch operation possible.

The inventive arrangement solves the aforesaid problems, by incorporating a large number of memory banks and a gate-matrix area on one single chip, where the memory proportion is considerably larger than the gate-matrix proportion.

The advantages afforded hereby are:
- short cycle times
- few connections
- low power consumption
- low costs for capsules and printed boards

BRIEF DESCRIPTION OF DRAWINGS

The inventive arrangement is described below with reference to an exemplifying embodiment thereof and with reference to the accompanying drawings, in which

Figure 1 is a simple illustration of the function of known technique;

Figure 2 illustrates the integration method;

Figure 3 illustrates the manner of constructing a chip in accordance with the invention;

Figure 4 illustrates a time switch stage incorporating the inventive arrangement; and

Figure 5 illustrates a space switch stage incorporating the inventive arrangement

BEST MODE FOR CARRYING OUT THE INVENTION

The characteristic differences between telephone exchange applications and large computer applications are:
- That the useful life telephone exchanges is from between 20 to 50 years, whereas the useful life of large computers is only about 5 years.
- The circumstances of ambient temperature requirements are also quite different. The ambient temperature in the case of large computers is 20 + 1°C. Telephone stations, on the other hand, must be capable of managing variations in ambient temperature of from +5° to +50°C. This places high demands on the semiconductor process in telephone exchange applications. A very important requirement is one of low power consumption, which in turn results in low silicon-chip temperature, resulting in low error intensity and long useful life. The transportation of data in telephone exchanges can be very intensive. The inputs and outputs on a chip constructed in accordance with the invention can be configured to transmit information at either low or high speeds.

The low-speed alternative requires the provision of a large number of connections to the capsule, which results in high capsule and silicon costs. The circuit boards in which these capsules, which comprise a very large number of pins, are to be mounted require a fine pattern class and many layers, and consequently the circuit boards are also expensive.

The high-speed alternative results in fewer connections to the capsule, cheaper capsules, cheaper silicon chips and cheaper circuit boards.

The high speed on the inputs and outputs however, places certain requirements, for instance high $f_t$ (limit frequency) on the bipolar transistors and low parasite capacitance in order to achieve low power consumption.

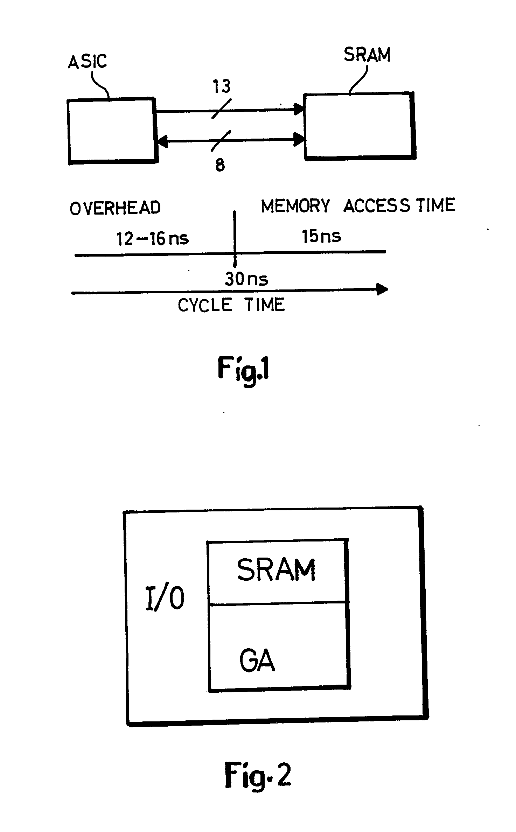

Figure 1 illustrates a known technique in the form of an external memory SRAM (Static Random Access Memory) which operates towards a large number of application-specific integrated circuits, ASIC:s. It is very difficult to achieve short cycle times with such a solution. This is because the application-specific circuit includes a register containing the address to the SRAM memory. The address is transmitted via the output unit (pad) of the ASIC circuit through the circuit board on which the circuits are mounted, into the address inputs of the SRAM memory, so that data is pointed out and read from the correct position in the memory SRAM. The data information is then transported through the circuit board into the application-specific circuit, and into the register via the input units. This results in a very high overhead in relation to the access time of the memory, which means that the total cycle time will be twice that of the memory access time.

Furthermore, the external address and data flow results in a large number of connections between the application-specific circuit and the memory SRAM, which in turn results in high power generation and an expensive circuit board.

The inventive arrangement solves these problems, by integrating the memory function and the gate-matrix function for the same silicon plate on a single chip, as illustrated in Figure 2. The advantages afforded hereby are:
- Short cycle times as proposed to SRAM, as a result of the integration on said chip.
- Fewer number of connections on the capsule, partly as a result of the integration of the SRAM memory, and partly as a result of the high input-output speed. The speed on input/outputs coincides with the speed on external terminals to telephone exchanges, the speed of which has been increased to 155 Mb/s and in the future will be increased conceivably to 620 Mb/s. This is another reason for the high input/output speed to/from the chip according to the invention.
- The aforesaid also results in low power consumption and much lower costs for capsules, silicon chips and circuit board.

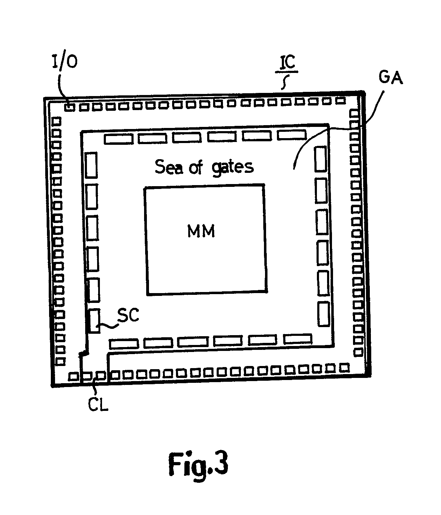

As will be seen from Figure 3, a chip constructed in accordance with the invention comprises three parts, i.e. an input/output part, a logic part and a memory part.

The input/output part comprises a plurality of pads I/O for connection between the chip and the various external connecting units. The chip presents, for instance, a first type of input/output units for adaptation to high speeds of low voltage swing and low power consumption. Another type of pads adapt to TTL logic and are intended for communication with standard logic and microprocessors of low speed. A third type of unit connects to earth, and fourth type of unit connects to different supply voltages. The units referenced CL are inputs for clock signals. The units SC are synchronizers and series/parallel/parallel/series converters.

The logic part comprises a gate-matrix area GA which includes 17,000 gate functions. It is possible to implement a large number of logic funtions in this gate matrix, depending upon the application. In the case of the illustrated embodiment, the basic elements of the gate matrix are NAND gates. The memory part consists of a 160 kb memory capacity in the form of 64 memory modules MM each having 640 word of 4 bits, which can be configured to a broader memory word and a greater memory depth if so desired. It is also possible to vary the number of memory modules within the framework of the total memory capacity and the space on the silicon plate.

The proportion of memory area in relation to the proportion of gate-matrix area on the chip is about 3/4 memory and 1/4 gate matrix.

The connection between memory modules and gate-matrix logic is effected through metallizations on the silicon plate. The gate-matrix function is selected by interconnecting NAND gates in a desired configuration with the aid of such metallizations. The third function of the metallization is to constitute a connection between input/output units I/O and the gate matrix. The function of these input/output units can also be programmed with the aid of metallizations.

In the case of the illustrated embodiment, the memory modules and gate matries are built-up on a chip with the aid of eleven mutually common mask layers. Seven unique mask layers connect gate matrices with memory modules and input/output units.

The inventive circuit can be utilized in a large number of mutually different applications, for example:
- Different types of buffer memory
- Queue memory (linked list)
- Microprogram memory for execution of instructions

- Elastic buffer for equalizing phase differences
- FIFO

Further examples of such areas of use include the incorporation of the circuit in TS switches (Time-Space), concentrators, terminal units (ET) for telephone stations, digital multiplexors, etc. One very important application, an account of which is given below, is the use of the circuit as a switch memory, for example in a digital switch of the TST type (Time-Space-Time) in a telephone exchange. Since the principle of time division is known, it will not be described here.

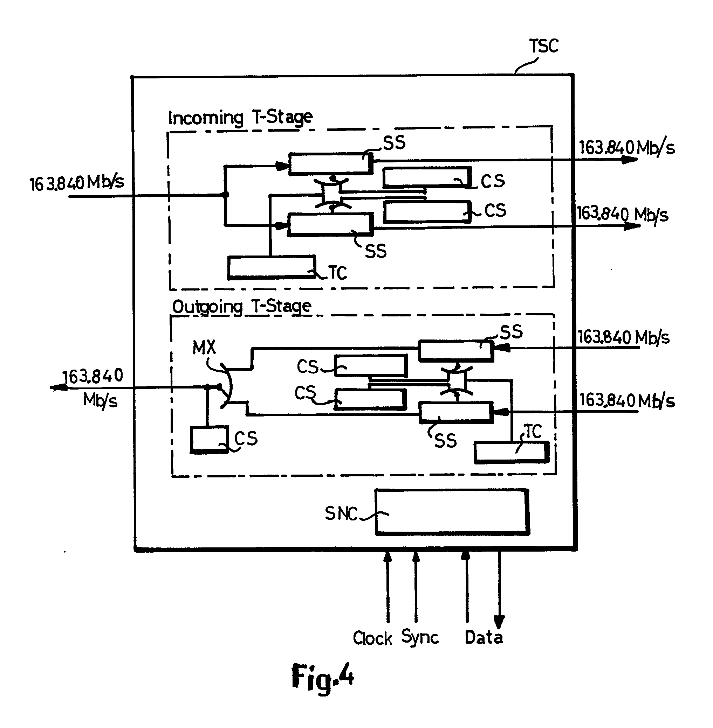

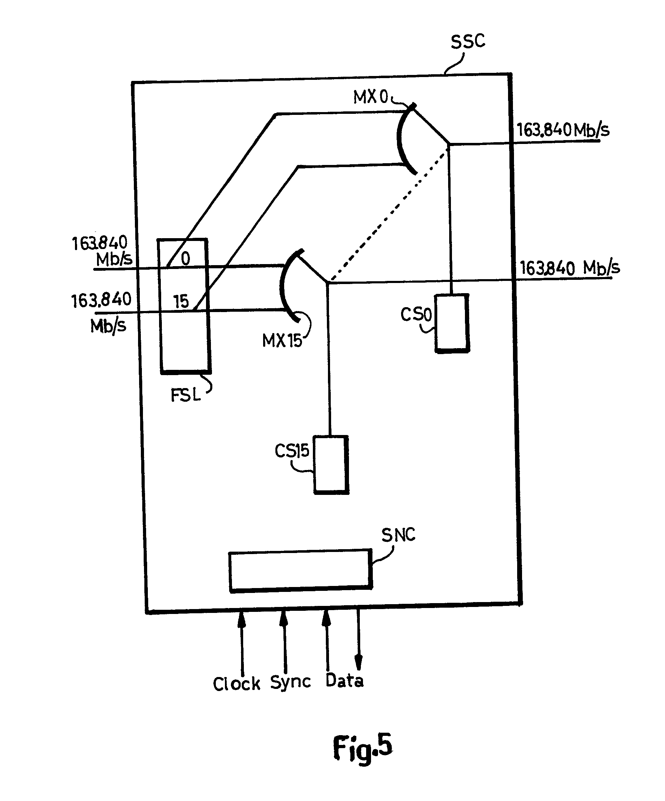

The larger part of such a digital switch can be implemented by utilizing the inventive chip in two applications:
- The time-stage chip (TSC) which performs the necessary time-switching functions to the 164 Mb/s line (IVC4) in both directions. All the time memories are duplicated, to avoid congestions in the T-S-T structure, see Figure 4.
- The space-stage chip (SSC) which performs the synchronous space switching, see Figure 5.

As will be seen from Figure 4, the time switch comprises two stages, an incoming time stage and an outgoing time stage.

A common feature of the two stages is a control unit SNC (Switching Network Controller) implemented in the gate-matrix network in the form of a microprogrammed processor, which is realized with the aid of circuits from the family AMD 29XX. The purpose of the control unit is to read status information from and write control information in the control memorie CS present on the chip. The control unit SNC has a clock input, a frame-synchronizing input 8 kHz and data inputs and outputs for communication with the next higher controlsystem level.

The data flow of 164 Mbit/s entering the time stage comes from external devices connected to the switch and is delivered to two switch memories SS. In the case of the illustrated embodiment, each of these switch memories has a format of 640 words each of 8 bits, of which 288 words are used for column switching. Data is written into the memory in parallel form. Writing of the incoming bit flow into the memories is controlled by a time slot counter TC incorporated in the gate matrix. Identical information is written into both memories.

The function of the control memories CS is to control the reading and writing of data in corresponding switch memories SS. The control memories have a format of 640 words of 12 bits each, of which 288 words and 9 bits are used. Data is read from and written into said control memories in parallel form. Data which is read from said switch memories SS has an 8-bit format. The information read from the memory is converted from parallel to series format and transmitted to the space stage SSC at a speed of 164 Mbit/s. Parallel/series converters and series/parallel converters are implemented in the gate-matrix area GA. As will be seen from the figures, two arrays of switch memory and control memory are provided. As before mentioned, this is because twice as many internal time slots are desired, in order to avoid internal congestion in the switch. In general, this means that the contents of the upper and the lower control memory will not be mutually the same.

As will be seen from Figure 4, the outgoing time stage receives on the different input of its connecting circuits two data flows transmitted from the space stage, each of said flows having a speed of 164 Mbit/s. The data flows are sent to respective switch memories SS. The switch memories have a format of 640 words of 8 bits, of which 288 words are used for switching columns. Data is written into a switch memory while being controlled by the control memory CS co-acting with said memory. The control memory has a format of 640 words of 12 bits each, of which 288 words and 9 bits are utilized for column switching. One of the 288 positions in the switch memory is selected with the aid of the 9 bits in the corresponding control memory, i.e. the control memory controls the writing of incoming data into one of the 288 positions of the switch memory. The next incoming data is written into the switch memory, in a known manner, during the next time slot in a frame comprised of a number of time slots. The position in the switch memory is controlled by the content of the next-arriving consecutive postion in the control memory. Reading of data from the switch memory is effective in a consecutive order and is controlled by a time slot counter TC.

Subsequent to reading data from the switch memories SS, the two 164 Mbit/s data flows are sent to the inputs of a multiplexer MX. The multiplexer selects words from solely one of the two data flows, while being controlled by a control memory CS intrinsic to said multiplexer. Each word in the control memory includes 4 bits. Only one of these is used for selection of multiplexer positions. The new 164 Mbit/s data flow on the output of the multiplexer is converted from parallel to series form and transmitted further to units connected to switch matrices.

The space switch stage SSC illustrated in Figure 5 has the format 16 x 16. The 16 data flows of 164 Mbit/s sent from the incoming time stage to the space switch are numbered 0-15. The space switch contains 16 multiplexers MXO-MX15, and one control memory CSO-CS15 corresponding to said multiplexers. Frame and word synchronization is effected by synchronizing logic FSL implemented in the gate matrix.

The gate-matrix area incorporates a switching network marker SNC, a micro-programmed processor of the aforementioned kind, the function of which is to update the 16 control memories. The switching network marker includes a clock-signal input of 164 MHz, a frame synchronizing input of 8 kHz, and data inputs and data outputs for communication with a superior control system.

The incoming data flow No. 0 is connected to position No. 0 on all sixteen multiplexers. Data flow No. 1 is connected to position No. 1 on all sixteen multiplexers, and so on for all of the sixteen data flows.

Consider multiplexer No. 0 which is connected to data flow No. 0. The multiplexer is controlled by a control memory CSO having a format of 640 words each of 4 bits, whereof 288 words are used. Consequently, during a given time slot of a frame, the multiplexer will be located in one of the sixteen positions, this position being determined by the position of the control memory. The position of the multiplexer is controlled during the next time slot by the next position in the control memory, and so on until all 288 positions have passed through. The first position in the control memory is then read again. The remaining 15 multiplexers and their associated control memories operate in the same manner. The description does not include time-division principle or the writing and reading of data into and from the memories, since such principles and procedures are knwon to the art.

## Claims

1. A universal micro-circuit in digital signal processing for example for storing and transmitting information in a telecommunication system, particularly digital information between switch modules in a telephone exchange, characterised in that for the purpose of achieving in a small physical space high packing density, short propagation times, low power consumption and a small number of internal connections on a superior system level, an integrated circuit (IC) in the form of a single silicon plate includes input and output devices in the form of pads (I/O) for connection and adaption between the integrated circuit and various types of external units connected to said circuit; and that a first type of the connection units (I/O) adapt the circuit (IC) to an interface for transmission of data at high to very high data speeds, and that a second type of said connection units (I/O) adapt the circuit (IC) to normal standard logic for normal to low data speed, in that the circuit further includes a logic part comprising a gate-matrix network (GA) for implementing various logic functions; in that the circuit further includes a memory part comprising a plurality of full custom designed memory modules (MM) which when necessary can be varied to the number and further more combined to fulfill the requirement of memory capacity for each separate application; in that the circuit also includes a control unit (SNC) for controlling the writing and reading of data into and out of the memories, at least one time-slot counter (TC), and a synchronizing logic (FSL) for the transmission of synchronizing signals to the units on the circuit; in that the proportion of the silicon-plate area for the memory part is considerably greater than the proportion of the surface for the gate-matrix part; and in that a bit synchronizing module (SC) common for a plurality of incoming data flows, is placed on the silicon plate allowing dynamic phase variations between data and clock information without data being lost.

2. An arrangement according to claim 1, characterised in that the memory modules comprise switch memories (SS) and control memories (CS) corresponding to the switch memories and functioning to control the reading and writing of data into and from said switch memories.

3. An arrangement according to claim 1, characterised in that the control unit (SNC), time-slot counter (TC) and synchronizing logic (FSL) are all incorporated in said gate-matrix logic (GA).

4. An arrangement according to claim 1, characterized in that connections between memory modules and gate-matrix network and between output-input pads and gate-matrix network are effected with the aid of metallizations in the silicon plate of the circuit (IC).

ASIC            SRAM

13

8

OVERHEAD        MEMORY ACCESS TIME

12 − 16 ns           15 ns

30 ns

CYCLE TIME

## Fig.1

I/O      SRAM

GA

## Fig.2

Fig.3

Fig.4

Fig.5

European Patent Office

**EUROPEAN SEARCH REPORT**

Application number

EP 89850371.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | Proceedings of the 1981 Custom integrated Circuits Conference, Americana Hotel, Rochester, 11-13 May 1981, p. 65-68, Tetzlaff et al: "An Ultra Versatile I$^2$L Chip", especially p. 65, column 1, the first portion and p. 66, column 1, the second portion | 1 | H 04 J 3/02 <br> H 04 Q 11/04 |
| | --- | | |
| P | Electronic Design, vol. 37 no. 16, 27 July 1989, p. 78-80, Goodenough: "Analog Array Adapt to Small Signals, High Power", especially p. 78, third portion and p. 79, last portion in the right column | 1-4 | |
| | --- | | |
| A | SE-B-350 169 (C.I.T. et al) | 1 | |
| | --- | | |
| A | FI-B- 53 386 (OY NOKIA AB) | 1 | |
| | --- | | **TECHNICAL FIELDS SEARCHED (Int. Cl.4)** |
| A | IBM Technical Disclosure Bulletin, vol 26, no. 11, April 1984, p. 5856-5857, Kendrick: "Programmable Digital input Multiplexer" | 1 | H 04 J <br> H 04 Q |
| | --- | | |
| A | Electronic Design, vol. 34, no. 12, 29 May 1986, p. 238, Goodenough: "Multiplexer moves ..." resp vol. 35, no 3, 5 February 1987, p. 147, Goodenough: "Four-input chip replaces ..." | 1 | |
| | ----- | | |
| | About the last five publications: See the documents in all | | |

The present search report has been drawn up for all claims

| Place of search | Date of completion of the search | Examiner |
|---|---|---|
| STOCKHOLM | 30-11-1989 | WIRLEE S. |